# EUROPEAN PATENT SPECIFICATION

(11) **EP 4 202 424 B1**
(45) Date of publication and mention of the grant of the patent: **24.06.2026**
(21) Application number: 21383178.7
(22) Date of filing: 21.12.2021
(51) Int. Cl.: G01N 21/956, G01N 21/88, G06T 7/586, G06T 7/00

(54) **METHOD AND SYSTEM FOR INSPECTION OF WELDS**
VERFAHREN UND VORRICHTUNG ZUR INSPEKTION VON SCHWEISSNÄHTEN
PROCÉDÉ ET SYSTÈME D'INSPECTION DE SOUDURES

(43) Date of publication of application: 28.06.2023
(73) Proprietor: Fundacion Centro de Tecnologias de Interaccion Visual y Communicaciones VICOMTECH, 20009 Donostia - San Sebastian (Guipuzcoa) (ES)
(72) Inventor: Barandiaran Martirena, Iñigo, Donosti (ES); Segura Lasa, Álvaro, Donosti (ES); Saiz Álvaro, Fátima, Donosti (ES); Etxaniz Sein, Unai, Donosti (ES); De la Cruz de la Cruz, Mikel, Donosti (ES); Aguinaga Azpiazu, Daniel, Donosti (ES); Pellicer Cidriain, Asier, Donosti (ES)
(74) Representative: Balder IP Law, S.L.

(56) References cited:
- JP-A- 2015 232 484
- JP-A- 2018 189 561
- US-A1- 2004 184 032

## Description

### TECHNICAL FIELD

The present invention relates to the field of assembling electronic components on printed circuit boards (PCB). In particular, it relates to methods and systems for the automatic inspection of welds made on PCBs.

### STATE OF THE ART

The industrial sector is immersed in the 4th Industrial Revolution, characterized by the digitalization of production processes. In many industrial sectors, such as transport (for example, automotive, railway and aeronautics) and energy sectors (for example, solar or wind power), the specificity and precision required in relation to the components integrated in different parts urge manufacturers to implement exhaustive quality controls in the facilities of the suppliers throughout their production processes to ensure that the manufactured product meets the demanding quality standards.

Quality control is implemented in order to detect errors during the production process. The main objective of quality control is to ensure that minimum quality requirements imposed by the industry and/or requested by the customer are met. However, new challenges are faced as production systems become more automated and improved. On the one hand, manually monitoring each product is time-consuming and costly, and on the other hand, taking the risk of bringing substandard items to market is a risk that should not be run.

Among the production processes related to the assembly of electronic components, the manual welding of certain components is especially critical. Manual welding applies, for example, to certain wiring, such as power supply wiring. This welding is difficult to automate due to its size and geometry. However, achieving high quality welds is critical for the proper operation of the complete board on which they are made. Typical defects of welds are short circuits and lack of material supply, among others. These and other problems can cause malfunctions or premature wear of the board. Visual inspection of these features is subject to different factors that make it difficult to apply routinely, so it is advisable to apply automatic verification mechanisms.

In the last years, artificial vision techniques have been incorporated in supervision and quality control stages in industrial processes. Machine vision includes a variety of tools capable of obtaining, processing and analyzing images of the physical world, in order to generate information that can be interpreted and used by a machine through digital processes. For example, accurate readings of size, inconsistencies in color, shape defects, missing parts, consistency of mixture and internal and surface defects in manufactured components can be obtained. Therefore, applying automatic machine vision techniques for quality control during a production process eliminates the subjectivity of inspection, increases productivity by reducing costs and improves product quality. For example, JP2015232484A discloses an image inspection apparatus for inspecting damages in printed characters on a workpiece using a photometric stereo method. JP2018189561A discloses an image inspection apparatus using a photometric stereo technique. US2004/0184032A1 discloses a system for inspecting objects on a printed circuit board.

However, not every industrial process enables straight-forward application of artificial vision techniques. This is the case of welding, because welds are highly reflective and/or have highly specular surfaces. Consequently, illumination for a proper image acquisition setup for a machine vision application is severely limited.

There is therefore a need to develop a new method for inspection of welds in industrial processes of assembling electronic components on printed circuit boards (PCB).

### DESCRIPTION OF THE INVENTION

The present invention aims at overcoming the above-mentioned drawbacks. The present invention provides a computer-implemented method for inspection of welds according to claim The method uses one or more image devices for capturing images of the product which quality needs to be evaluated, and artificial vision techniques for automatically assessing the quality of the product (welds). The method enables to quickly ascertain whether a product meets the required quality standards or not.

A first aspect of the invention relates to a computer-implemented method for inspection of welds in a printed circuit board, comprising: with an optical system comprising a camera and an illuminator disposed in the vicinity of a weld to be inspected, wherein the illuminator is coaxially located in the optical axis of the camera: switching on a first quadrant of the illuminator while the three other quadrants of the illuminator are switched off, and taking a first image of the weld; switching off the first quadrant of the illuminator and switching on a second quadrant thereof, and taking a second image of the weld; switching off the second quadrant of the illuminator and switching on a third quadrant thereof, and taking a third image of the weld; switching off the third quadrant of the illuminator and switching on a fourth quadrant thereof, and taking a fourth image of the weld; digitally applying a photometric stereo reconstruction technique to the four images of the weld for obtaining a 5-dimensional image of the weld; delivering the 5-dimensional image of the weld to a model for detection of anomalies and assessing by the model whether the weld is defective or not.

In embodiments of the invention, the stages of: taking first, second, third and fourth images of the weld; obtaining a 5-dimensional image of the weld; and delivering the 5-dimensional image of the weld to a model for detection of anomalies and assessing by the model whether the weld is defective or not; is done twice for each weld, with the optical system in two different positions. In embodiments of the invention, the method further comprises disposing the optical system in the vicinity of another weld to be inspected of the printed circuit board, and repeating for the new weld the stages of taking images of the weld, obtaining a 5-dimensional image of the weld and assessing whether the weld is defective or not.

In embodiments of the invention, once an inspected weld is considered defective, stopping the process of inspecting welds of the printed circuit board.

In embodiments of the invention, the method further comprises, if an inspected weld is considered defective, triggering an alarm. The alarm may mean that the printed circuit board on which the defective weld is disposed, is defective. Alternatively, the alarm may mean that the printed circuit board on which the defective weld is disposed, is defective.

In embodiments of the invention, the model for detection of anomalies was trained using a machine-learning process involving at least 100 5-dimensional images of welds.

According to the invention, the stage of digitally applying a photometric stereo reconstruction technique to the four images of a weld for obtaining a 5-dimensional image of the weld, is carried out as follows: using the red channel of the four images, applying a stereo-photometric reconstruction technique, thus obtaining for the red channel two images describing the topography of the surface on which light has struck and one image describing the spectral response of the surface on which light has struck; using the green channel of the four images, applying a stereo-photometric reconstruction technique, thus obtaining for the green channel two images describing the topography of the surface on which light has struck and one image describing the spectral response of the surface on which light has struck; using the blue channel of the four images, applying a stereo-photometric reconstruction technique, thus obtaining for the red channel two images describing the topography of the surface on which light has struck and one image describing the spectral response of the surface on which light has struck; from the three range images, obtaining a normalized range image; from the three curvature images, obtaining a normalized curvature image; adding the three images describing the spectral response of the surface on which light has struck to the two normalized images, thus forming the 5-dimensional image.

In embodiments of the invention, the optical system is attached to a robotic system configured to move following (x, y, z) trajectories, so that the optical system can consequently move following corresponding trajectories, so that the optical system can sequentially be disposed in the vicinity of welds of the printed circuit board to be inspected.

The invention further provides a system for inspection of welds in a printed circuit board, according to claim 9. It comprises: an optical system comprising a camera and an illuminator, wherein the illuminator is coaxially located in the optical axis of the camera, the optical system being configured to be disposed in the vicinity of a weld to be inspected and to capture images of the weld; and processing means configured for digitally applying a photometric stereo reconstruction technique to the captured images of the weld and for assessing, based on the images, by a model for detection of anomalies, whether the weld is defective or not.

In embodiments of the invention, the system further comprises a robotic system to which the optical system is attached, the robotic system being configured to move following (x, y, z) trajectories, so that the optical system can consequently move following corresponding (x, y, z) trajectories, the optical system thus sequentially disposing in the vicinity of welds of the printed circuit board to be inspected.

A third aspect of the invention relates to a computer program product comprising computer program instructions/code according to claim 11 performing the method of the first aspect of the invention.

A fourth aspect of the invention relates to a computer-readable memory/medium that stores program instructions/code according to claim 12 performing the method of the first aspect of the invention.

Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows an illuminator comprised in an optical system according to an embodiment of the invention.
Figure 2 shows a camera comprised in an optical system according to an embodiment of the invention.
Figure 3 shows an optical system comprising an illuminator and a camera, according to an embodiment of the invention.
Figures 4A-4C schematically show different views of a robotic system for inspecting printed circuit boards according to an embodiment of the invention.
Figure 5A shows a frame carrying several boards to be inspected. Figure 5B shows in detail some welds of one of the boards of Figure 5A.
Figures 6A-6C show examples of welds. Figure 6A shows a weld of bad quality. Figure 6B shows a weld of good quality. Figure 6C shows (left) a bad quality weld which produces a short circuit.
Figure 7 shows a flow chart of a method of obtaining a 5D image of a weld according to embodiments of the invention.
Figures 8A-8C show flow charts of methods for assessing the quality of welds according to embodiments of the invention.
Figure 9 shows a schematic diagram of a system for inspection of welds, including control equipment, according to embodiments of the invention.

### DESCRIPTION OF A WAY OF CARRYING OUT THE INVENTION

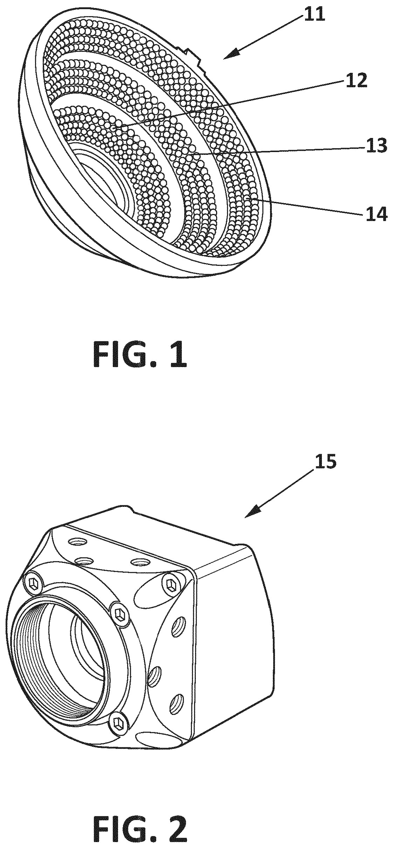

Figures 1-3 schematically show an optical system 10 used in a method for inspecting boards, such as PCBs, and, in particular, for inspecting welds applied to electronic components assembled to the boards, according to the present invention. The optical system 10 comprises an illuminator 11 and a camera 15.

The illuminator 11 is preferably a dome illuminator, for example as illustrated in Figure 1. A dome illuminator has a substantially semispherical concavity (inner surface) comprising a plurality of LEDs (light emitting diodes) substantially uniformly distributed along the semispherical wall. The surface containing the LEDs is covered by a material which allows diffuse illumination. For example, the inner wall of the semispherical illuminator is covered with a translucent material. The dome of the illuminator is therefore a diffuse dome. The semispherical concavity of the dome illuminator 11 forms three concentric rings 12-14 of LEDs of different colors: a red ring 12, a green ring 13 and a blue ring 14. The dome illuminator is therefore an RGB illuminator. When a diffuse dome illuminator is used, the diffuse light that illuminates the object under analysis reaches the object from all directions because light bounces off the spherical concavity into which it is projected. A diffuse effect is thus obtained, and shadows and glare are suppressed. Besides, surfaces of the object are softened and any effect that may distort the later analysis is reduced.

The camera 15 is preferably a matrix camera. A non-limiting example of camera 15 is shown in Figure 2. In a matrix camera, the camera sensor has a matrix of pixels. The sensor may be based on charge coupled devices (CCD), in which case it is called CCD sensor and the camera is called CCD camera. Alternatively, the camera may be a CMOS camera, that is to say, a camera having a CMOS sensor. Or the camera may be based on a different sensing technology. The camera 15 is a high-resolution camera. The camera resolution is at least 4K, also referred to as 4K Ultra High Definition (HD), which means horizontal display resolution of approximately 4,000 pixels. For example, the camera resolution is 4K or 8K (also referred to as 8K Ultra HD). One skilled in the art will understand that the evolution of technology may enable to increase the camera resolution beyond 8K. Preferably, the camera 15 has image acquisition speed of at least 4 images per second, such as 8 images per second, or 16 images per second, or 32 images per second, or even more. The camera 15 is out of the scope of the present invention.

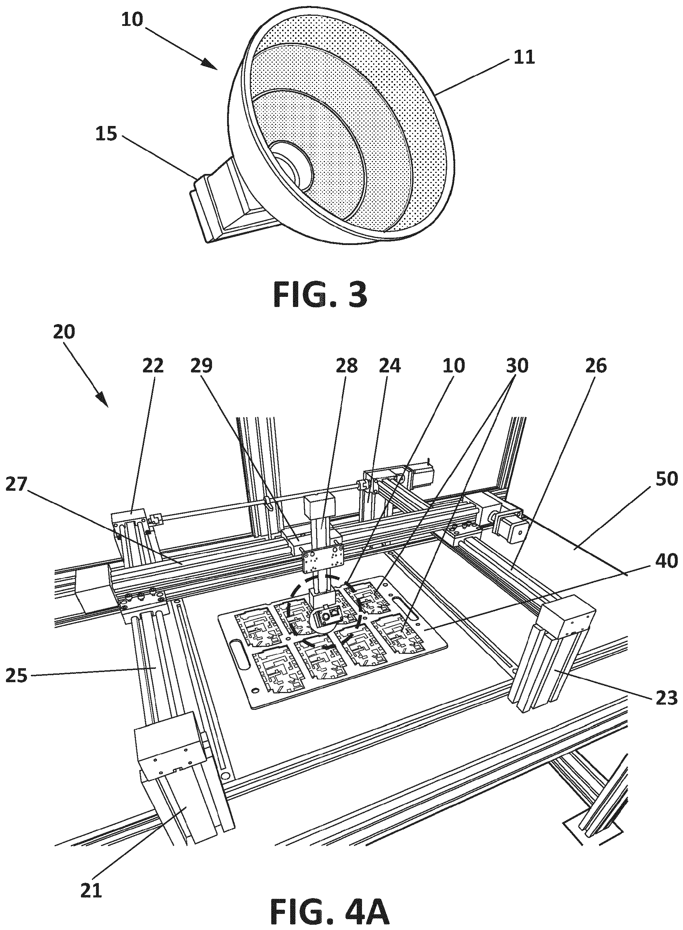

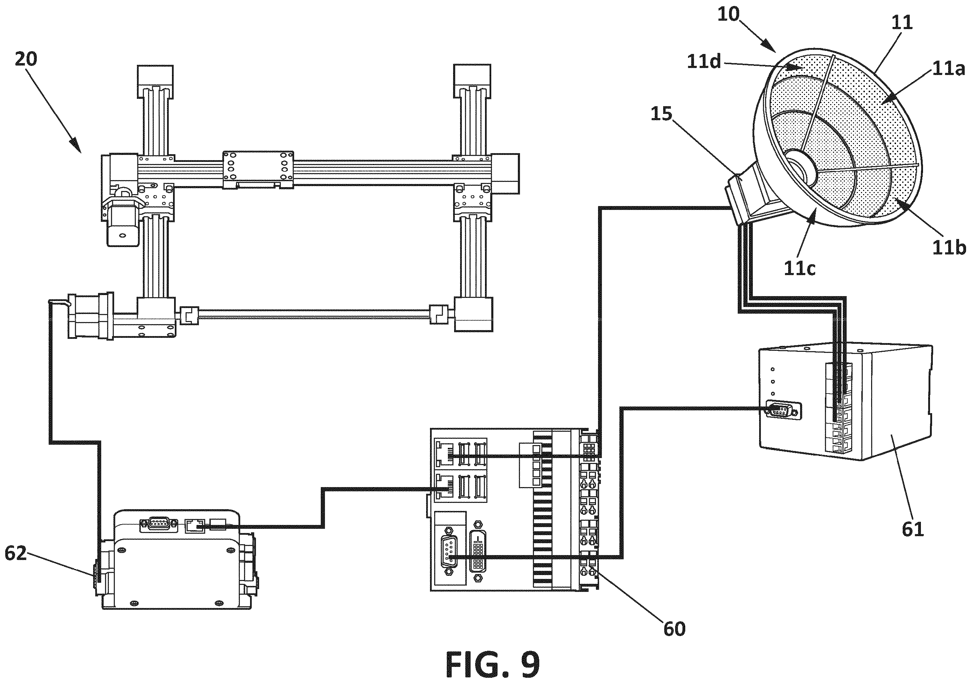

The illuminator 11 is coaxially located in the optical axis of the camera 15, so that the main direction of incident light is substantially the same as the acquisition direction by the camera sensor. This is illustrated in Figure 3. Due to the different inclination of the different light rings 12-14 comprised in the illuminator 11, the camera 15 receives the incidence of each color with a different angle or inclination, depending on the geometry of the surface on which light strikes. In addition, the illuminator 11 is divided into four sectors or quadrants (for example referred to as north, south, east and west sectors). Controlling means 61, such as a controller (see for example Figure 9), associated to the illuminator 11 permits to select a sector 11a-11d (also referred to as quadrant) to be switched on while the three other sectors remain switched off. Controlling means 61 also controls the amount of time a selected sector 11a-11d is switched on. In other words, the illuminator 11 can independently switch on for a certain time period each one of the four quadrants 11a-11d. For example, the illuminator 11 can switch on one of the four quadrants and kept off the three other quadrants.

Controlling means 61 is preferably a separate part with respect to the illuminator 11, in which case it is communicatively coupled to the illuminator 11, as shown in Figure 9. In Figure 9, the controlling means 61 is coupled to the illuminator 11 through a wired connection. They could also be coupled through a wireless connection. Alternatively, controlling means 61 can be integrated within the illuminator 11 (for example, comprised in the illuminator). Controlling means 61 must be previously programmed with a predefined sequence indicating the sectors 11a-11d to be switched on/off and the power of the LEDs (concentric rings 12-14). Usually, each sector or quadrant of the illuminator 11 remains switched on for a time period sufficient for the camera 15 to acquire at least one image. The operation of the controlling means 61 is for example managed by a general processor 60 (for example a personal computer, such as an industrial personal computer, or a laptop), from which the execution of the illuminator control sequence is launched. The general processor or main processor 60 shown in Figure 9 is for example part of a personal computer.

Preferably, the power of the LEDs (emitting power) does not change in different color rings 12-14 and/or sectors 11a-11d. For example, the emitting power is fixed at the beginning of the acquisition process and remains fixed for the whole acquisition process. The emitting power is selected taking into account different parameters, such as the aperture range of the camera lens (how much light can enter per time unit) and the exposure time of the camera sensor (for how long the sensor captures light). When the one or more considered parameters are fixed, including the emitting power, they are stored in a configuration file, which will be used during the process of image acquisition.

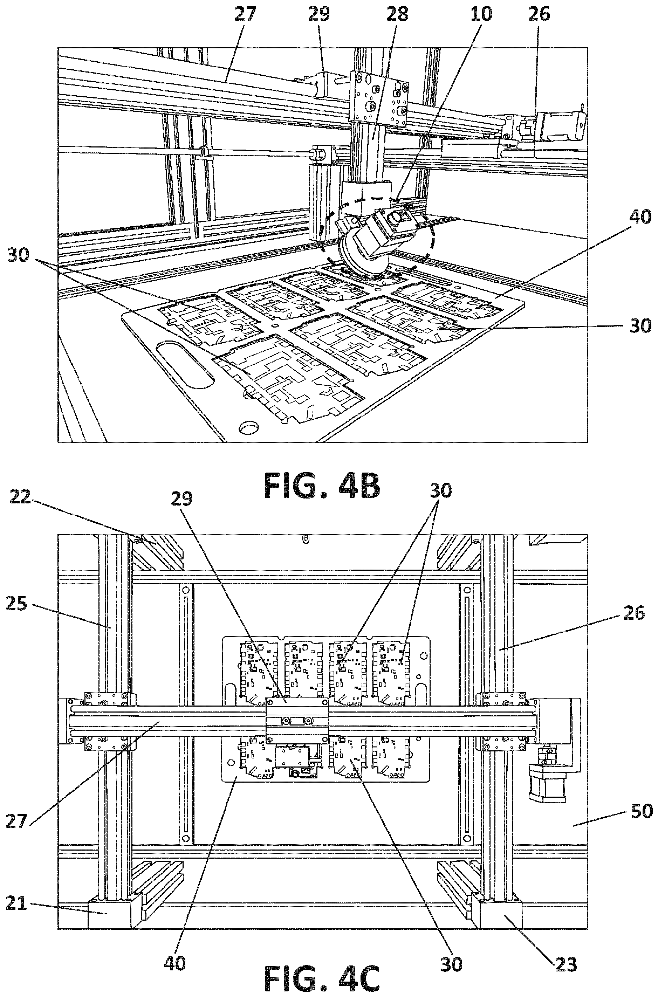

The optical system 10 for capturing images can be attached or anchor to a robotic system 20 as schematically shown in Figures 4A-4C. The robotic system 20 is a cartesian robotic system. The robotic system 20 has three axis (three DoF, degrees of freedom), meaning that it moves for example in a XYZ system. The board or boards 30 to be inspected may be placed on a plate or frame 40, such as a fixture plate or breadboard, in turn disposed on a table 50. This is shown in Figures 4A-4C. The robotic system 20 is used to enable the optical system 10 to take images of the board or boards 30 from different positions. In particular, the robotic system 20 moves the optical system 20 to a plurality of positions previously established, which correspond to each of the welds of a board 30 to be inspected. The plate 40 and/or the table 50 may be part of the robotic system 20. Alternatively, the plate 40 and/or the table 50 may be elements not comprised in the robotic system 20.

The cartesian robotic system 20 comprises a structure for supporting the optical system 10 and for enabling relative movement between the optical system 10 and the board(s) 30. The structure may be implemented with four vertical beams 21-24 disposed perpendicular with respect to the surface on which the boards 30 are to be placed (i.e. plate 40 or table 50). The lowest ends of the four vertical beams 21-24 form a rectangle. The surface on which the four vertical beams 21-24 are disposed may be the table 50 on which the boards 30 to be inspected (or the frame 40 on which the boards 30 are disposed) are located. The structure also has two horizontal beams 25-26 connecting pairs of vertical beams. A first horizontal beam 25 connects the upper end of vertical beam 21 with the upper end of vertical beam 22. A second horizontal beam 26 connects the upper end of vertical beam 23 with the upper end of vertical beam 24. Therefore, horizontal beams 25, 26 are parallel to each other. The structure also comprises a third horizontal beam 27 disposed perpendicular to horizontal beams 25, 26. The third horizontal beam 27 can slide along the first and second horizontal beams 25, 26. For example, the two ends of the third horizontal beam 27 are equipped with sliding means configured to respectively move along beams 25, 26. In the present text, the term "vertical" should be understood as vertical with respect to the surface on which the boards 30 to be inspected (or the frame 40 on which the boards 30 are disposed) are located. And the term "horizontal" should be understood as disposed in a plane parallel to this surface.

A support 28 is attached to the third horizontal beam 27 by means of a sliding member 29, so that when member 29 slides along the third horizontal beam 27, the support 28 travels along the horizontal beam 27. The sliding member 29 also enables vertical movement (in the Z axis) of support 28 towards the surface on which the boards 30 to be inspected are located, or away this surface. The optical system 10 is attached or anchored to the support 28. This way, the optical system 10 can move along the horizontal beam 27: when sliding member 29 slides along the horizontal beam 27, the optical system 10 moves in the X axis. In turn, when the third horizontal beam 27 slides along the first and second horizontal beams 25-26, the optical system 10 moves in the Y axis. And when support 28 slides vertically (in the Z axis), the optical system 10 can come closer to or further from the surface on which the boards 30 are disposed.

Alternatively, the frame or table on which the board(s) 30 under inspection are disposed moves for example in a XYZ system, while the optical system 10 remains in a fixed position. In this case, the frame 40 is for example disposed on a turnplate (not shown). This is, though, a less preferred embodiment. Or, alternatively, both the optical system 10 and the frame 40 or table 50 moves; for example, the frame 40 can be disposed on a turnplate, which enables movement in the XY directions, while the optical system 10 can move in the Z direction by a simpler robotic system.

The robotic system 20 has a controller 62 which controls movement of the robotic system 20, an example of which is shown in Figure 9. Controller 62 has processing means, such as one or more processors or microprocessors. For example, controller 62 may be implemented in a personal computer (PC) or laptop having at least one central processing unit (CPU). One or more human-machine interfaces (HMI) may be used as interface between the controller 62 (and the software embedded therein) and an operator. Non-limiting examples of HMI may be a monitor, a keyboard, a mouse, or the like. Controller 62 comprises memory means in a control software is stored. Also, trajectories to be followed by the optical system 10 are stored. For example, a plurality of (x,y,z) positions to be reached by the optical system 10, corresponding to a respective plurality of welds in a board 30, are stored in the memory means of the controller 62. Previously, the position of each weld has been identified and each welding position has been associated with a position to be reached by the robot (and consequently, by the optical system). Thus, when the robotic system 20 sequentially moves the optical system 10 to the programmed (or planned) position (x, y, z), the camera 25 of the optical system 10 can take images of each weld. In particular, once the optical system 10 is disposed at a certain selected position from which a weld can be inspected, the optical system 10 takes images of the weld following the previously defined sequence indicating the sectors of the illuminator 11 to be switched on/off and the power of the LEDs of the concentric rings 12-14 of the illuminator 11. As in the case of the controlling means 61 controlling the illuminator 11, the operation of the controller 62 controlling the movement of the robotic system 20 is for example managed by the general processor 60 (for example a personal computer or a laptop), to which the controller 62 is preferably connected through a wired interface.

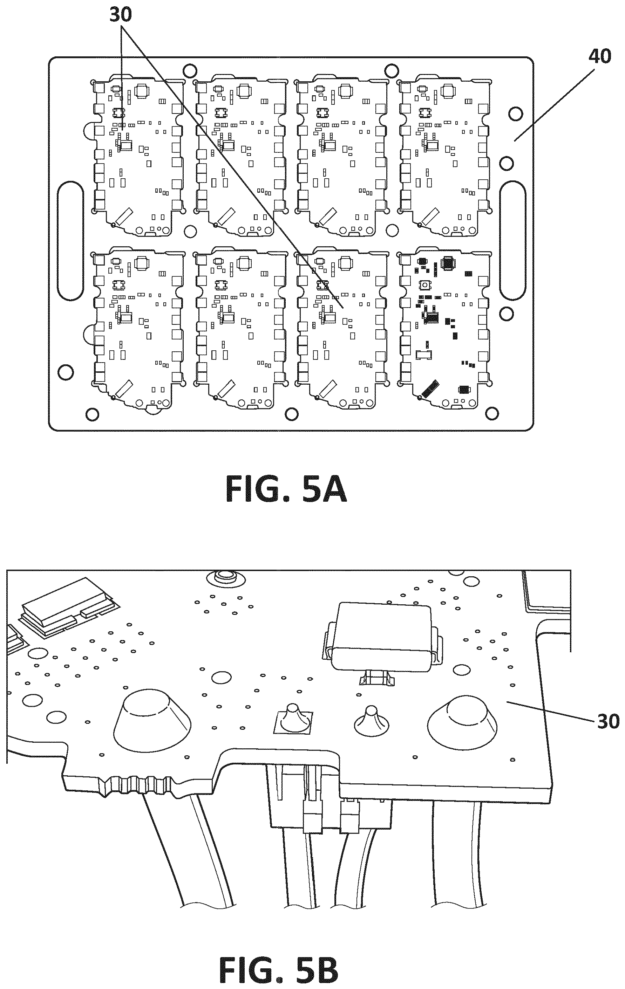

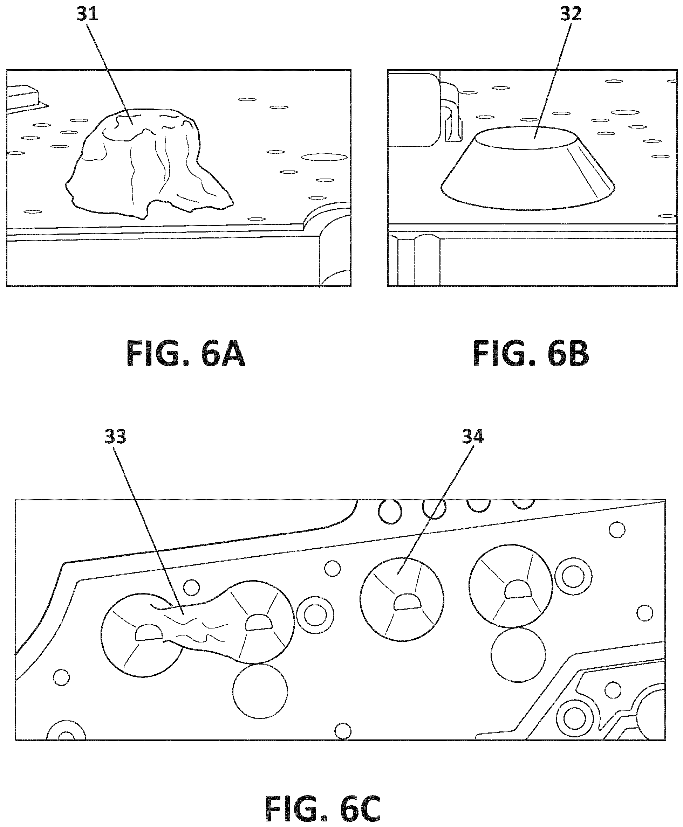

Therefore, with the combination of the movement of horizontal beam 27 along horizontal beams 25-26, the horizontal movement of the support 28 along the horizontal beam 27, and the vertical movement of the support 28, the (x, y, z) positions ordered by the controller in order to follow the required trajectories, are reproduced. Therefore, the robotic system 20 enables X, Y, Z movements. The control software may use reference points to automatically adjust to small changes in the orientation and location of the boards 30 disposed on the plate 40 or table 50. High positional accuracy is thus obtained. Although the shown robotic system 20 has 3 axis (DoF), the robotic system 20 may have more than three axis (DoF), such as 4 axis (DoF) or 5 axis (DoF). In the case of 3 DoF, as is the case of the robotic system 20 in Figures 4A-4C, (x, y, z) points, corresponding to the trajectory to be followed by the optical system, are provided to the robotic system, in particular to its controller, which in turn controls the movement of the optical system 10. Thanks to this automation of displacement, welds of different boards 30, for example arranged in a same frame 40 as shown in Figure 5A, can be inspected. Some welds of one of the boards 30 are shown in detail in Figure 5B. Examples of welds are shown in more detail in Figures 6A-6C. For example, a bad quality weld 31 (Figure 6A) versus a good quality one 32 (Figure 6B) are shown. In the bad quality weld 31, a lack of material supply can be appreciated. In turn, in Figure 6C a bad quality weld 33 is shown (left), in which a short circuit between two components can be seen. On the right, a good quality weld 34, not causing short circuit, can be seen.

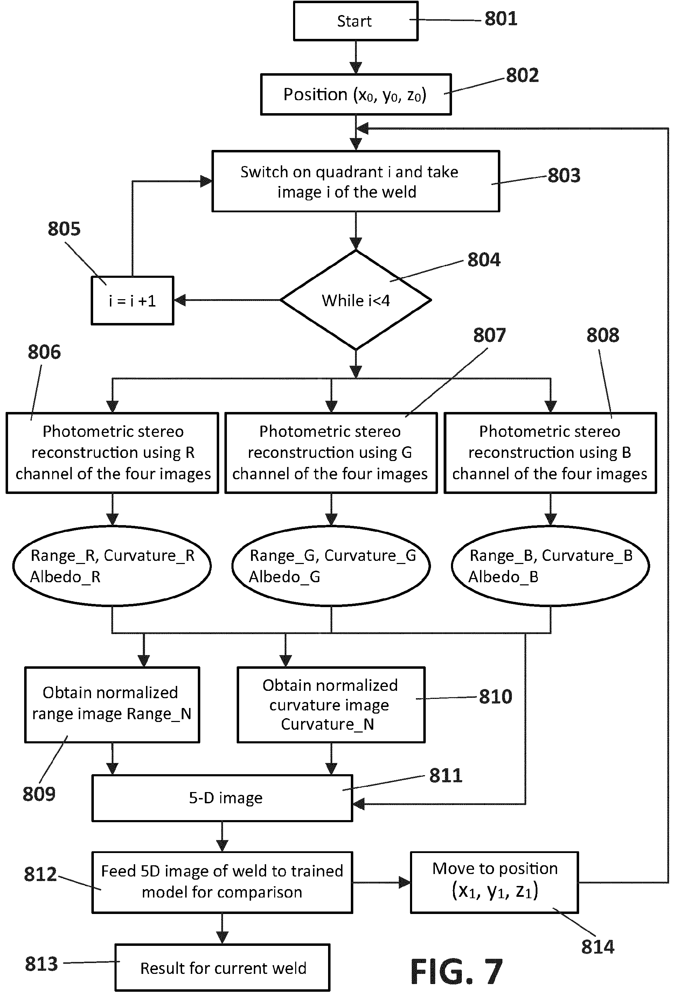

A process of automatically acquiring images for inspecting the welds of a certain board is disclosed next, as shown in the flow diagram of Figure 7. The illuminator 11 has been coaxially mounted to the camera 15, forming the optical system 10 as shown in Figure 3. The optical system 10 has been moved by means of the robotic system 20 and is placed over the board 30 under inspection, in particular over the particular weld under inspection, in a (x₀,y₀,z₀) position that permits illuminating the particular weld, so that the camera 15 can capture images of the weld following the previously defined sequence indicating the illuminator sectors 11a-11d to be switched on/off and the power of the LEDs of the concentric rings 12-14. The optical system 10 must be at a distance -from the weld to be inspected- within the depth of field (set of focused distances) given a certain focal length of the camera lens. Preferably, the distance between the optical system 10 and the weld is selected such that when an image is taken, the weld occupies at least 70% of the size of the image captured by the camera, that is to say, at least 70% of the pixels of the sensor (which depends on the sensor resolution, which is preferably selected to be at least at least 4K). This corresponds to stage 802 in Figure 7. In this first position (x₀,y₀,z₀) of the optical system 10, the following operations are made:
First (stage 803), one of the four quadrants 11a-11d of illuminator 11 is switched on following the defined sequence, while the three other quadrants are switched off. At least a first image of a weld 30₀ (wherein "0" represents the weld corresponding to position (x₀,y₀,z₀)) is taken. All the three color rings 12-14 of the illuminator 11 are used (but only the first quadrant is on).

Stage 803 is repeated for each of the four quadrants 11a-11d of the illuminator 11, as represented by boxes 804 and 805 in Figure 7. Second, the quadrant which was on is turned off, and another quadrant of the illuminator 11 is turned on (controlled by controlling means 61). At least a second image of the weld 30₀ is taken. Again, all the three color rings 12-14 of the illuminator 11 are used (but only the second quadrant is on). Third, the quadrant which was on is turned off, and another quadrant (one which had not yet been switched on) of the illuminator 11 is turned on. At least a third image of the weld 30₀ is taken. Again, all the three color rings 12-14 of the illuminator 11 are used (but only the third quadrant is on). Fourth, the quadrant which was on is turned off, and the last quadrant of the illuminator 11 is turned on (the only one which had not yet been switched on). At least a fourth image of the weld 30₀ is taken. Again, all the three color rings 12-14 of the illuminator 11 are used (but only the fourth quadrant is on).

So far, at least four RGB images of the weld 30₀ have been captured from a same position (x₀,y₀,z₀) of the optical system 10.

In a particular embodiment, at least two images of each weld 30₀ 30₁, ..., are taken for each illuminated sector or quadrant: a zenithal image (from above) and an image captured with a certain angle (as shown for example in Figure 4B). In this case, the position of the optical system 10 changes (at least one of its axis X, Y and/or Z) so that the second image (for example, the angle image if the first image was the zenithal image) is captured from a different position with respect to the position at which the first image was captured. These two positions at which two images (per quadrant) of a weld 30₀ are captured can be named (x₀,y₀,z₀) and (x₀,y₀,z₀)'. It is remarked that a single image per quadrant is enough to complete the process of obtaining 5D images to be fed to a trained model (to be described next) and to make a correct classification of the weld. However, making the process from two points of view (zenithal and angle ones) enhances the robustness of the classification. More than one image per type (zenithal image and angle image) may be taken.

Then, for each weld, from the four images of the weld 30₀ taken in each position (x₀,y₀,z₀), (x₀,y₀,z₀)', a photometric stereo reconstruction technique is applied to each of the channels (RGB channels) independently (stages 806-808). Photometric stereo reconstruction is a technique of photometric 3D-reconstruction. Photometric 3D-reconstruction aims at inferring the geometry of a scene from one or several images, by inverting a physical model describing the image formation. Other photometric 3D-reconstruction techniques are shape-from-shading and shape-from-polarisation. An overview of these techniques is disclosed by J.D. Durou et. al. in A Comprehensive Introduction to Photometric 3D-reconstruction, Advances in Photometric 3D-Reconstruction, Springer International Publishing, pp.1-29, 2020. In other words, using first the red (R) channel of the four RGB images, a stereo-photometric reconstruction technique is applied (stage 806) so that a first stereo-photometric reconstruction is obtained; then using the green (G) channel of the four RGB images, a stereo-photometric reconstruction technique is applied (stage 807) so that a second stereo-photometric reconstruction is obtained; and next using the blue (B) channel of the four RGB images, a stereo-photometric reconstruction technique is applied (stage 808) so that a third stereo-photometric reconstruction is obtained.

The result of each stereo-photometric reconstruction process is a set of three images per channel: two images describing the topography of the surface on which light has struck and one image describing the spectral response of the surface on which light has struck. The two surface topography (also referred to as shape) images are referred to as range and curvature images. A range image is computed as the image gradient magnitude. It highlights information about changes in the intensity of the image. A curvature image provides the contour lines of the surface topography. The third image (providing spectral response features) provides information of how the surface (the object captured in the image by the camera) responds to or reflects each of the emitted colors. This third image is called albedo. An albedo image (also called texture image) provides color or spectral response. So, for each channel (R, G, B), a range image, a curvature image and an albedo image are obtained.

Therefore, by applying the stereo-photometric reconstruction process to each of the three channels R, G, B independently, the following images are obtained: three albedo images (one for each channel: albedo_R, albedo_G and albedo_B respectively), three range images (one for each channel: range_R, range_G and range_B) and three curvature images (one for each channel: curvature_R, curvature_G and curvature_B).

Next, from the three range images, a normalized range image is obtained (stage 809). For example, the normalized range image range_N is obtained by applying a median operation (pixel by pixel) between the range_R, range_G and range_B images. A same operation is applied to the three curvature images, so that a normalized curvature image is obtained (stage 810). For example, the normalized curvature image curvature_N is obtained by applying a median operation (pixel by pixel) between the curvature_R, curvature_G and curvature_B images. The three albedo images previously obtained are added to the two normalized images, forming a 5-dimensional image composed of the following channels (stage 811):
- Albedo_R
- Albedo_G
- Albedo_B
- Range_N
- Curvature_N

This obtained 5-dimensional image presents very rich information because it brings together, in a compact form, topological information and spectral response information.

The 5-dimensional image of the weld is delivered to a model for detection of anomalies. This is done at stage 812. The model assesses whether the weld is defective or not.

In the particular embodiment in which at least two images (for example, zenithal image and angle image) of each weld 30₀ 30₁, ..., are taken for each illuminated sector or quadrant, the above described process until a 5-D image is obtained and the 5-D image is fed to the model (stage 812) is repeated for each position (zenithal position (x₀,y₀,z₀) and angle position (x₀,y₀,z₀)'). The two 5-D images can be independently classified at stage 812.

The model (stage 812) is a machine learning algorithm for detection of anomalies, previously trained with a collection of 5D images. Preferably, the model is a classification algorithm, more preferably a supervised learning classification algorithm, in which the set of classes forming part of the classification universe are: correct welds and defective welds. In other words, the classification algorithm has a classification universe of two classes representing the type of weld: good one (correct one) or bad one (incorrect one). This way, at stage 812 a machine learning process is applied for the identification or characterization of correct and incorrect welds. There exist different types of algorithms that can be used for discriminating between correct and incorrect welds. Non-limiting examples of algorithms capable of discriminating between correct and incorrect elements (detection of anomalies) are: Bayesian networks, Naïve Bayes, neural networks, random forest, SVM, decision trees, among others. In a particular embodiment, a convolutional neural network (or algorithm) based on anomaly detection is applied.

The selected model has been previously trained with a collection of 5D images obtained following the image processing procedure described at stages 803-811 of Figure 7. The 5D images have been obtained from a corresponding plurality of welds.

In embodiments of the invention, the selected algorithm is trained with data samples (5D images) previously determined as correct, meaning that it has been manually checked that they correspond to correct welds. In this case, in use of the trained model, when a 5D image is fed to the model (stage 812 in Figure 7), the 5D image is assigned to one of the two classes of the classification universe: good one (correct one) if the 5D image is recognized as belonging to the first class; or bad one (incorrect one) if the 5D image is not recognized as belonging to the first class.

In other embodiments of the invention, the selected algorithm is trained with 5D images corresponding to either correct welds or incorrect welds. These 5D images have been previously marked as correct ones or incorrect ones. This way, the model is not only trained with correct welds; rather, a collection of incorrect ones has also been used to train the model.

For an accurate training of the model (involving for example adjusting the weights and values of different filters and/or convolutional masks in different layers), a significant number of 5D images of welds (for example correct welds, or for example both correct and defective welds) must be collected. For example, at least 100 5D images of welds are required, such as at least 200 images, or at least 400 images, or at least 500 images. After this training process, a model capable of classifying a new 5D image of a weld as correct or incorrect is obtained.

Once the network is trained, the network is able to, given a new sample (a new 5D image), provide a value indicating a distance or difference with respect to the trained normal class set, that is to say, with respect to the class representing the correct welds. This way, the trained algorithm is able to classify a weld as correct (as it would be considered by an expert technician) or incorrect (as a defective weld would be considered by the expert technician). In other words, a result for a current weld is provided. This is represented at stage 813 in Figure 7.

The disclosed process with which a 5-dimensional (5D) image is obtained from the at least four captured images (one per quadrant of the illuminator 11), and the 5D image is fed to the trained model for classification as correct or incorrect weld, is repeated several times, for many different images of welds (in principle, for all the welds present in a board). This is represented at box 814 in Figure 7. This means that, if there is more than one board to be inspected (on/in the frame or table), the robotic system 20 is programmed so that, once the optical system 10 has taken images of the first weld 30₀ at position (x₀,y₀,z₀) (and optionally also at position (x₀,y₀,z₀)') the optical system 10 moves to next position (x₁,y₁,z₁) to inspect a next weld 30₁, as represented in box 814 in Figure 7. This way, all welds 30₀, 30₁, ..., 30ₙ of a board 30 can be classified (stage 813). When all n welds of a board are classified as correct or incorrect, the optical system 10 is moved towards a new board 30, over which it moves to take images of each of the welds to be inspected. This process is repeated until all the boards have been inspected, and images of all the welds of each board have been taken and assessed.

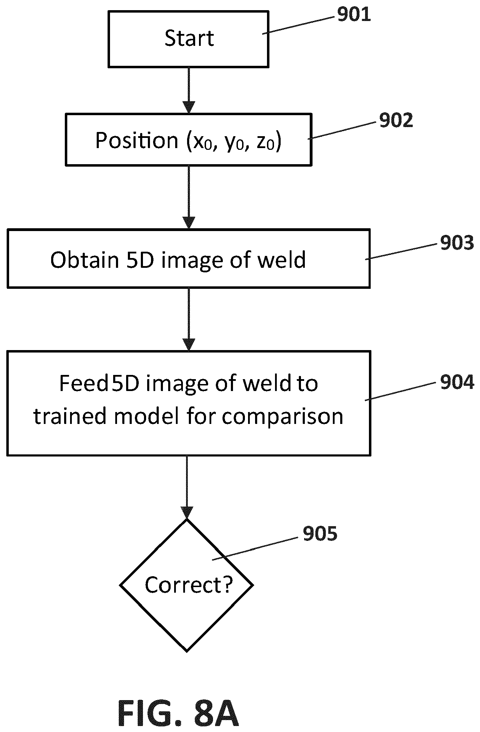

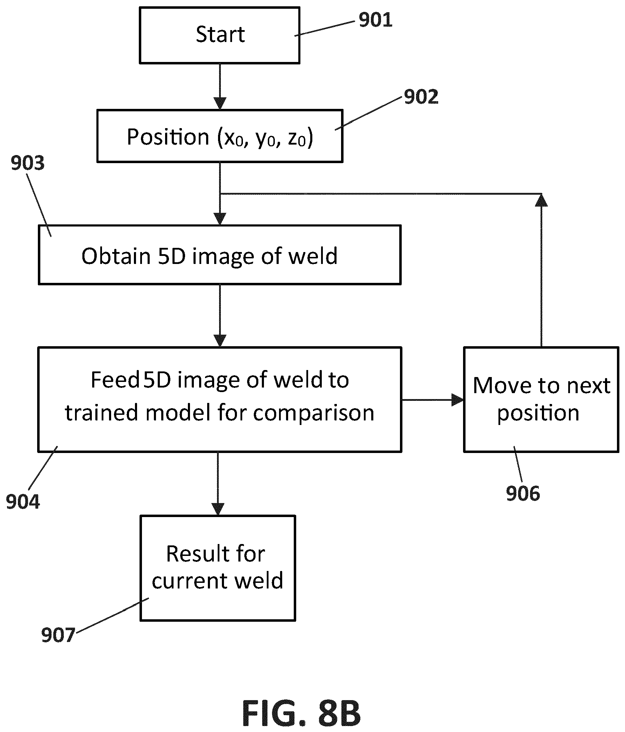

Figures 8A-8C show different flow diagrams of processes for inspection of welds included in boards 30 (such as PCBs) according to embodiments of the invention. Figure 8A shows a possible scheme, referred to a simplest situation of inspection of a single weld. In Figure 8A, stage 903 for obtaining a 5D image of a weld refers, in a summarized way for the sake of conciseness, to stages 803-811 in Figure 7. For the inspection of the board(s) for example disposed on/in a frame or table, the robotic system 20 can be programmed so that the optical system 10 (camera and illuminator) is sequentially positioned above each of the welds 30ₙ of each board, as explained with reference to Figure 7. This is exemplified in Figure 8B. If there is more than one board to be inspected (on/in the frame or table), the robotic system 20 is programmed so that, once the optical system 10 has taken images of all the welds wₙ of a board, the optical system is moved towards a new board, over which it moves to take images of each of the welds to be inspected. This process is repeated until all the boards have been inspected, and images of all the welds of each board have been taken and assessed. Again, in Figure 8B, stage 903 for obtaining a 5D image of a weld refers, in a summarized way for the sake of conciseness, to stages 803-811 in Figure 7. In each position (x₀,y₀,z₀), (x₁,y₁,z₁), etc. of the robotic system 20 (and therefore of the optical system 10) as represented at block 902, which corresponds to a weld to be inspected within a board, images are automatically acquired and processed (so as to obtain a respective 5D image as represented at block 903). Each 5D image is delivered to the trained network model (stage 904). The network model delivers a response based on the comparison of the actual 5D image with the trained model. The response is preferably a binary one: either the weld is correct (ok) or the weld is not correct (not ok, defective). The binary response is assigned to each weld.

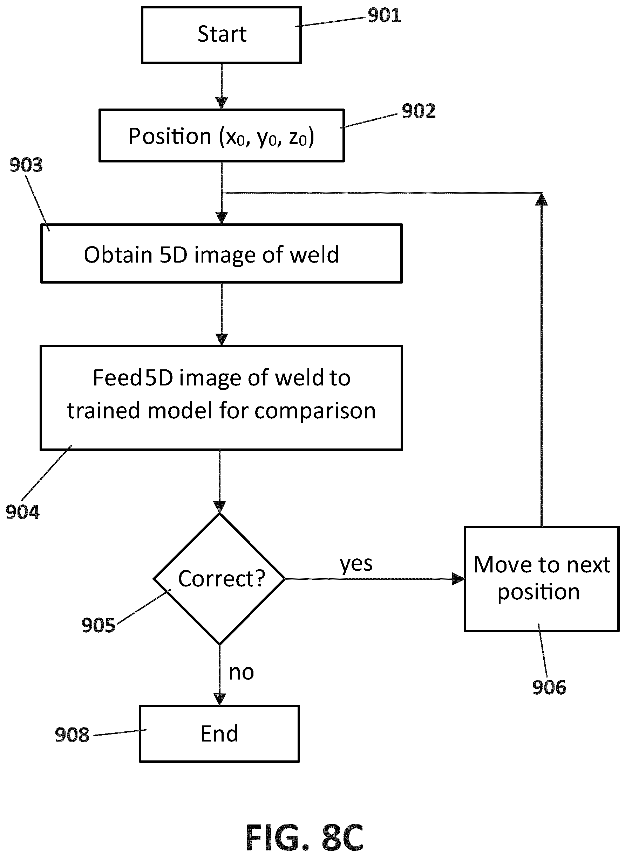

In embodiments of the invention, if an inspected weld is considered defective, an alarm is triggered. In embodiments of the invention, if at least one of the welds comprised in a board is classified as defective, the whole board is identified as such. In other words, the inspection process of a board can be stopped once it has been identified that any of its welds is incorrect (output of block 905 is"no"), to move immediately to a next board. This is exemplified in Figure 8C. If an alarm has been triggered, the alarm may mean that the printed circuit board on which the defective weld is disposed, is defective.

In other embodiments, all the welds of a board are inspected, irrespectively of the number of defective welds being detected (Figure 8B). In this case, an amount of detective welds per board can be established. In this case an alarm can mean that the single weld is defective.

Finally, a decision as to whether a board 30 is correct or not is made, based on a previously established criterion. For example, it may have been established that a single defective weld in a board implies that the board should be considered defective or incorrect. Or it may have been established that only if there are more than two, or more than three (or any amount one could establish) defective welds, should a board be considered as defective.

In sum, the method for inspection of welds made on PCBs in manufacturing operations described in the present invention permits, after a very simple and quick configuration stage in which a data model of a new work part is created, to determine whether a weld made on a PCB is correct or not. Thanks to this method, PCBs having one or more incorrect welds are moved away from the manufacturing process, thus preventing the commercialization of PCBs having defective welds or the inclusion of PCBs having defective welds in additional manufacturing processes or products. Thus, machine failure or malfunction, loss or severe damage to equipment/property and/or severe productive loss, among others, are prevented.

The inspection of the frame or table is performed sequentially, board by board, and within each board, a specific order can be specified for the inspection of the welds. The execution of the trained model is performed in processing means, such as a general-purpose processor of a workstation, personal computer (PC), laptop or any other electronic device comprising processing means. For example, it can be executed in the general processor 60 (Figure 9). The processing means performs the method of the present invention by executing corresponding software instructions. The trained model (box 802, 904) can be executed at the same processing means which controls the robotic system 20 (processing means which preferably controls de image acquisition process) or at a different processing means. The execution of the trained model can be done locally (for example in the vicinity of the industrial facility in which the boards 30 are manufactured, for example at the same processing means which controls the robotic system 20) or remotely, for example in the cloud or in any other environment providing enough computation capacity (such as at a processor in the cloud or edge). The training of the model may have been done at a different processing system or at the same one.

The software code for performing the method of the invention and the storage of the images, may be stored in memory means associated to the processing means, such as in a hard disk (HD) of the computer device to which the processing means belongs, or in memory means remotely located, such as in a server, or in any other suitable data storage means. The computing means or processing means in which the method is executed must have a minimum processing capacity, such as at least 1 Gflop/s (Gigaflops per second = 10⁹ flops per second). The images may be stored in any graphics file format. The images are preferably stored in a graphics file format supporting lossless data compression. Non-limiting examples of formats in which the images may be stored are Graphics Interchange Format (GIF) and Portable Network Graphics (PNG). Most preferably, the images are stored in PNG format.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A computer-implemented method for inspection of welds in a printed circuit board, comprising:
with an optical system (10) comprising a camera (15) configured to capture colour images and an illuminator (11) defining four quadrants (11a-11d) and disposed in the vicinity of a weld to be inspected, wherein the illuminator (11) is coaxially located in the optical axis of the camera (15):
switching on (803) a first quadrant of the illuminator (11) while the three other quadrants of the illuminator (11) are switched off, and taking a first image of the weld;
switching off the first quadrant of the illuminator (11) and switching on a second quadrant thereof, and taking a second image of the weld;
switching off the second quadrant of the illuminator (11) and switching on a third quadrant thereof, and taking a third image of the weld;
switching off the third quadrant of the illuminator (11) and switching on a fourth quadrant thereof, and taking a fourth image of the weld;
digitally applying a photometric stereo reconstruction technique to the four images of the weld for obtaining (903) a 5-dimensional image of the weld, as follows:
using the red channel of the four images, applying (806) a stereo-photometric reconstruction technique, thus obtaining for the red channel two images (Range_R, Curvature_R) describing the topography of the surface on which light has struck and one image (Albedo_R) describing the spectral response of the surface on which light has struck;
using the green channel of the four images, applying (807) a stereo-photometric reconstruction technique, thus obtaining for the green channel two images (Range_G, Curvature_G) describing the topography of the surface on which light has struck and one image (Albedo_G) describing the spectral response of the surface on which light has struck;
using the blue channel of the four images, applying (808) a stereo-photometric reconstruction technique, thus obtaining for the red channel two images (Range_B, Curvature_B) describing the topography of the surface on which light has struck and one image (Albedo_B) describing the spectral response of the surface on which light has struck;
from the three range images (Range_R, Range_G, Range_B), obtaining (809) a normalized range image (Range_N);
from the three curvature images (Curvature_R, Curvature_G, Curvature_B), obtaining (810) a normalized curvature image (Curvature_N);
adding the three images (Albedo_R, Albedo_G, Albedo_B) describing the spectral response of the surface on which light has struck to the two normalized images (Range_N, Curvature_N), thus forming the 5-dimensional image;
delivering the 5-dimensional image of the weld to a model for detection of anomalies and assessing by the model whether the weld is defective or not.

2. The method of claim 1, wherein the stages of: taking first, second, third and fourth images of the weld; obtaining a 5-dimensional image of the weld; and delivering the 5-dimensional image of the weld to a model for detection of anomalies and assessing by the model whether the weld is defective or not; is done twice for each weld, with the optical system (10) in two different positions.

3. The method of either claim 1 or 2, further comprising disposing the optical system (10) in the vicinity of another weld to be inspected of the printed circuit board, and repeating for the new weld the stages of taking images of the weld, obtaining a 5-dimensional image of the weld and assessing whether the weld is defective or not.

4. The method of claim 3, wherein, once an inspected weld is considered defective, stopping the process of inspecting welds of the printed circuit board.

5. The method of any one of the preceding claims, further comprising, if an inspected weld is considered defective, triggering an alarm.

6. The method of claim 5, wherein the alarm means that the printed circuit board on which the defective weld is disposed, is defective.

7. The method of any one of the preceding claims, wherein the model for detection of anomalies was trained using a machine-learning process involving at least 100 5-dimensional images of welds.

8. The method of any one of the preceding claims, wherein the optical system (10) is attached to a robotic system (20) configured to move following (x, y, z) trajectories, so that the optical system (10) can consequently move following corresponding (x, y, z) trajectories, so that the optical system (10) can sequentially be disposed in the vicinity of welds of the printed circuit board to be inspected.

9. A system for inspection of welds in a printed circuit board, comprising:
an optical system (10) comprising a camera (15) configured to capture colour images and an illuminator (11) defining four quadrants (11a-11d), wherein the illuminator (11) is coaxially located in the optical axis of the camera (15), the optical system (10) being configured to be disposed in the vicinity of a weld to be inspected and to capture four images of the weld;
processing means configured for digitally applying a photometric stereo reconstruction technique to the captured images of the weld as follows:
using the red channel of the four images, applying (806) a stereo-photometric reconstruction technique, thus obtaining for the red channel two images (Range_R, Curvature_R) describing the topography of the surface on which light has struck and one image (Albedo_R) describing the spectral response of the surface on which light has struck;
using the green channel of the four images, applying (807) a stereo-photometric reconstruction technique, thus obtaining for the green channel two images (Range_G, Curvature_G) describing the topography of the surface on which light has struck and one image (Albedo_G) describing the spectral response of the surface on which light has struck;
using the blue channel of the four images, applying (808) a stereo-photometric reconstruction technique, thus obtaining for the red channel two images (Range_B, Curvature_B) describing the topography of the surface on which light has struck and one image (Albedo_B) describing the spectral response of the surface on which light has struck;
from the three range images (Range_R, Range_G, Range_B), obtaining (809) a normalized range image (Range_N);
from the three curvature images (Curvature_R, Curvature_G, Curvature_B), obtaining (810) a normalized curvature image (Curvature_N);
adding the three images (Albedo_R, Albedo_G, Albedo_B) describing the spectral response of the surface on which light has struck to the two normalized images (Range_N, Curvature_N), thus forming the 5-dimensional image;
and for assessing, based on the images, by a model for detection of anomalies, whether the weld is defective or not.

10. The system of claim 9, further comprising a robotic system (20) to which the optical system (10) is attached, the robotic system (20) being configured to move following (x, y, z) trajectories, so that the optical system (10) can consequently move following corresponding (x, y, z) trajectories, the optical system (10) thus sequentially disposing in the vicinity of welds of the printed circuit board to be inspected.

11. A computer program product comprising computer program instructions/code for performing the method according to any of claims 1-8 when run on a system according to any of claims 9-10.

12. A computer-readable memory/medium that stores program instructions/code for performing the method according to any of claims 1-8 when run on a system according to any of claims 9-10.

## Patentansprüche

1. Computerimplementiertes Verfahren zur Prüfung von Schweißnähten in einer Leiterplatte, umfassend:
mit einem optischen System (10), umfassend eine zum Festhalten von Farbbildern konfigurierte Kamera (15) und einen vier Quadranten (11a-11d) definierenden Beleuchter (11) und angeordnet in der Nähe einer zu prüfenden Schweißnaht, wobei sich der Beleuchter (11) koaxial in der optischen Achse der Kamera (15) befindet:
Einschalten (803) eines ersten Quadranten des Beleuchters (11), während die drei anderen Quadranten des Beleuchters (11) ausgeschaltet sind, und Aufnehmen eines ersten Bildes der Schweißnaht;
Ausschalten des ersten Quadranten des Beleuchters (11) und Einschalten eines zweiten Quadranten desselben, und Aufnehmen eines zweiten Bildes der Schweißnaht;
Ausschalten des zweiten Quadranten des Beleuchters (11) und Einschalten eines dritten Quadranten desselben, und Aufnehmen eines dritten Bildes der Schweißnaht;
Ausschalten des dritten Quadranten des Beleuchters (11) und Einschalten eines vierten Quadranten desselben, und Aufnehmen eines vierten Bildes der Schweißnaht;
digitales Anwenden einer stereophotometrischen Rekonstruktionstechnik auf die vier Bilder der Schweißnaht, um ein 5-dimensionales Bild der Schweißnaht zu erhalten (903), und zwar wie folgt:
unter Verwendung des Rotkanals der vier Bilder, Anwenden (806) einer stereophotometrischen Rekonstruktionstechnik, wodurch für den Rotkanal zwei Bilder (Range_R, Curvature_R) erhalten werden, die die Topographie der Oberfläche beschreiben, auf die Licht getroffen ist, und ein Bild (Albedo_R), das die spektrale Ansprechcharakteristik der Oberfläche beschreibt, auf die Licht getroffen ist;
unter Verwendung des Grünkanals der vier Bilder, Anwenden (807) einer stereophotometrischen Rekonstruktionstechnik, wodurch für den Grünkanal zwei Bilder (Range_G, Curvature_G) erhalten werden, die die Topographie der Oberfläche beschreiben, auf die Licht getroffen ist, und ein Bild (Albedo_G), das die spektrale Ansprechcharakteristik der Oberfläche beschreibt, auf die Licht getroffen ist;
unter Verwendung des Blaukanals der vier Bilder, Anwenden (808) einer stereophotometrischen Rekonstruktionstechnik, wodurch für den Rotkanal zwei Bilder (Range_B, Curvature_B) erhalten werden, die die Topographie der Oberfläche beschreiben, auf die Licht getroffen ist, und ein Bild (Albedo_B), das die spektrale Ansprechcharakteristik der Oberfläche beschreibt, auf die Licht getroffen ist;
Erhalten (809) eines normalisierten Entfernungsbildes (Range_N) aus den drei Entfernungsbildern (Range_R, Range_G, Range_B);
Erhalten (810) eines normalisierten Krümmungsbildes (Curvature_N) aus den drei Krümmungsbildern (Curvature_R, Curvature_G, Curvature_B);
Hinzufügen der drei Bilder (Albedo_R, Albedo_G, Albedo_B), die die spektrale Ansprechcharakteristik der Oberfläche beschreiben, auf die Licht getroffen ist, zu den zwei normalisierten Bildern (Range_N, Curvature_N), wodurch das 5-dimensionale Bild gebildet wird;
Bereitstellen des 5-dimensionalen Bildes der Schweißnaht einem Modell zur Erkennung von Anomalien und Beurteilen durch das Modell, ob die Schweißnaht fehlerhaft ist oder nicht.

2. Verfahren nach Anspruch 1, wobei die Schritte: Aufnehmen eines ersten, zweiten, dritten und vierten Bildes der Schweißnaht; Erhalten eines 5-dimensionalen Bildes der Schweißnaht; und Bereitstellen des 5-dimensionalen Bildes der Schweißnaht einem Modell zur Erkennung von Anomalien und Beurteilen durch das Modell, ob die Schweißnaht fehlerhaft ist oder nicht; für jede Schweißnaht zweimal durchgeführt werden, wobei sich das optische System (10) in zwei verschiedenen Positionen befindet.

3. Verfahren nach Anspruch 1 oder 2, ferner umfassend Anordnen des optischen Systems (10) in der Nähe einer weiteren zu prüfenden Schweißnaht der Leiterplatte und Wiederholen der Schritte des Aufnehmens von Bildern der Schweißnaht, Erhalten eines 5-dimensionalen Bildes der Schweißnaht und Beurteilen, ob die Schweißnaht fehlerhaft ist oder nicht, für die neue Schweißnaht.

4. Verfahren nach Anspruch 3, wobei, sobald eine geprüfte Schweißnaht als fehlerhaft eingestuft wird, der Prozess der Prüfung der Schweißnähte der Leiterplatte beendet wird.

5. Verfahren nach einem der vorstehenden Ansprüche, ferner umfassend, dass, wenn eine geprüfte Schweißnaht als fehlerhaft eingestuft wird, ein Alarm ausgelöst wird.

6. Verfahren nach Anspruch 5, wobei der Alarm bedeutet, dass die Leiterplatte, auf der sich die fehlerhafte Schweißnaht befindet, fehlerhaft ist.

7. Verfahren nach einem der vorstehenden Ansprüche, wobei das Modell zur Erkennung von Anomalien unter Verwendung eines maschinellen Lernprozesses trainiert wurde, der mindestens 100 5-dimensionale Bilder von Schweißnähten umfasst.

8. Verfahren nach einem der vorstehenden Ansprüche, wobei das optische System (10) an einem Robotersystem (20) angebracht ist, das so konfiguriert ist, dass es sich bewegt, indem es (x, y, z)-Trajektorien folgt, so dass sich das optische System (10) dementsprechend bewegen kann, indem es entsprechenden (x, y, z)-Trajektorien folgt, so dass das optische System (10) nacheinander in der Nähe von Schweißnähten der zu prüfenden Leiterplatte angeordnet werden kann.

9. System zur Prüfung von Schweißnähten in einer Leiterplatte, umfassend:
ein optisches System (10), umfassend eine zum Festhalten von Farbbildern konfigurierte Kamera (15) und einen vier Quadranten (11a-11d) definierenden Beleuchter (11),
wobei sich der Beleuchter (11) koaxial in der optischen Achse der Kamera (15) befindet, wobei das optische System (10) so konfiguriert ist, dass es in der Nähe einer zu prüfenden Schweißnaht angeordnet wird und vier Bilder der Schweißnaht aufnimmt, und eine Verarbeitungsvorrichtung, die so konfiguriert ist, dass sie eine stereophotometrische Rekonstruktionstechnik wie folgt digital auf die aufgenommenen Bilder der Schweißnaht anwendet:
unter Verwendung des Rotkanals der vier Bilder, Anwenden (806) einer stereophotometrischen Rekonstruktionstechnik, wodurch für den Rotkanal zwei Bilder (Range_R, Curvature_R) erhalten werden, die die Topographie der Oberfläche beschreiben, auf die Licht getroffen ist, und ein Bild (Albedo_R), das die spektrale Ansprechcharakteristik der Oberfläche beschreibt, auf die Licht getroffen ist;
unter Verwendung des Grünkanals der vier Bilder, Anwenden (807) einer stereophotometrischen Rekonstruktionstechnik, wodurch für den Grünkanal zwei Bilder (Range_G, Curvature_G) erhalten werden, die die Topographie der Oberfläche beschreiben, auf die Licht getroffen ist, und ein Bild (Albedo_G), das die spektrale Ansprechcharakteristik der Oberfläche beschreibt, auf die Licht getroffen ist;
unter Verwendung des Blaukanals der vier Bilder, Anwenden (808) einer stereophotometrischen Rekonstruktionstechnik, wodurch für den Rotkanal zwei Bilder (Range_B, Curvature_B) erhalten werden, die die Topographie der Oberfläche beschreiben, auf die Licht getroffen ist, und ein Bild (Albedo_B), das die spektrale Ansprechcharakteristik der Oberfläche beschreibt, auf die Licht getroffen ist;
Erhalten (809) eines normalisierten Entfernungsbildes (Range_N) aus den drei Entfernungsbildern (Range_R, Range_G, Range_B);
Erhalten (810) eines normalisierten Krümmungsbildes (Curvature_N) aus den drei Krümmungsbildern (Curvature_R, Curvature_G, Curvature_B);
Hinzufügen der drei Bilder (Albedo_R, Albedo_G, Albedo_B), die die spektrale Ansprechcharakteristik der Oberfläche beschreiben, auf die Licht getroffen ist, zu den beiden normalisierten Bildern (Range_N, Curvature_N), wodurch das 5-dimensionale Bild gebildet wird;
und zum Beurteilen durch ein Modell zur Erkennung von Anomalien auf der Grundlage der Bilder, ob die Schweißnaht fehlerhaft ist oder nicht.

10. System nach Anspruch 9, ferner umfassend ein Robotersystem (20), an dem das optische System (10) angebracht ist, wobei das Robotersystem (20) so konfiguriert ist, dass es sich bewegt, indem es (x, y, z)-Trajektorien folgt, so dass sich das optische System (10) dementsprechend bewegen kann, indem es entsprechenden (x, y, z)-Trajektorien folgt, wobei das optische System (10) somit nacheinander in der Nähe von Schweißnähten der zu prüfenden Leiterplatte angeordnet wird.

11. Computerprogrammprodukt, umfassend Computerprogrammbefehle / -code zum Ausführen des Verfahrens nach einem der Ansprüche 1-8, wenn es auf einem System nach einem der Ansprüche 9-10 ausgeführt wird.

12. Computerlesbarer Speicher / computerlesbares Medium, der / das Programmbefehle / - code zum Ausführen des Verfahrens nach einem der Ansprüche 1-8 speichert, wenn es auf einem System nach einem der Ansprüche 9-10 ausgeführt wird.

## Revendications

1. Méthode mise en œuvre par ordinateur pour l'inspection de soudures dans une carte de circuit imprimé, comprenant :
à l'aide d'un système optique (10) comprenant une caméra (15) configurée pour capturer des images en couleur et un illuminateur (11) définissant quatre quadrants (11a-11d) et disposé près d'une soudure à inspecter, l'illuminateur (11) étant situé coaxialement dans l'axe optique de la caméra (15) :
l'activation (803) d'un premier quadrant de l'illuminateur (11) tandis que les trois autres quadrants de l'illuminateur (11) sont désactivés, et la prise d'une première image de la soudure ;
la désactivation du premier quadrant de l'illuminateur (11) et l'activation d'un deuxième quadrant de celui-ci, et la prise d'une deuxième image de la soudure ;
la désactivation du deuxième quadrant de l'illuminateur (11) et l'activation d'un troisième quadrant de celui-ci, et la prise d'une troisième image de la soudure ;
la désactivation du troisième quadrant de l'illuminateur (11) et l'activation d'un quatrième quadrant de celui-ci, et la prise d'une quatrième image de la soudure ;
l'application numérique d'une technique de reconstruction stéréo photométrique aux quatre images de la soudure afin d'obtenir (903) une image en 5 dimensions de la soudure, comme suit :
en utilisant le canal rouge des quatre images, appliquer (806) une technique de reconstruction photométrique stéréo, obtenant ainsi pour le canal rouge deux images (Range_R, Curvature_R) décrivant la topographie de la surface sur laquelle la lumière a frappé et une image (Albedo_R) décrivant la réponse spectrale de la surface sur laquelle la lumière a frappé ;
en utilisant le canal vert des quatre images, appliquer (807) une technique de reconstruction photométrique stéréo, obtenant ainsi pour le canal vert deux images (Range_G, Curvature_G) décrivant la topographie de la surface sur laquelle la lumière a frappé et une image (Albedo_G) décrivant la réponse spectrale de la surface sur laquelle la lumière a frappé ;
en utilisant le canal bleu des quatre images, appliquer (808) une technique de reconstruction photométrique stéréo, obtenant ainsi pour le canal rouge deux images (Range_B, Curvature_B) décrivant la topographie de la surface sur laquelle la lumière a frappé et une image (Albedo_B) décrivant la réponse spectrale de la surface sur laquelle la lumière a frappé ;
à partir des trois images télémétriques (Range_R, Range_G, Range_B), obtenir (809) une image télémétrique normalisée (Range_N) ;
à partir des trois images de courbure (Curvature_R, Curvature_G, Curvature_B), obtenir (810) une image de courbure normalisée (Curvature_N) ;
ajouter les trois images (Albedo_R, Albedo_G, Albedo_B) décrivant la réponse spectrale de la surface sur laquelle la lumière a frappé aux deux images normalisées (Range_N, Curvature_N), formant ainsi l'image en 5 dimensions ;
délivrer l'image en 5 dimensions de la soudure à un modèle de détection d'anomalies et évaluer par le modèle si la soudure est défectueuse ou non.

2. Méthode selon la revendication 1, dans laquelle les étapes suivantes : prendre les première, deuxième, troisième et quatrième images de la soudure ; obtenir une image en 5 dimensions de la soudure ; et délivrer l'image en 5 dimensions de la soudure à un modèle de détection d'anomalies et évaluer par le modèle si la soudure est défectueuse ou non ; sont effectuées deux fois pour chaque soudure, où le système optique (10) se trouve dans deux positions différentes.

3. Méthode selon la revendication 1 ou 2, comprenant en outre la disposition du système optique (10) près d'une autre soudure à inspecter de la carte de circuit imprimé, et la répétition pour la nouvelle soudure des étapes de prise des images de la soudure, d'obtention d'une image en 5 dimensions de la soudure et d'évaluation précisant si la soudure est défectueuse ou non.

4. Méthode selon la revendication 3, dans laquelle, une fois qu'une soudure inspectée est jugée défectueuse, le procédé d'inspection des soudures de la carte de circuit imprimé est arrêté.

5. Méthode selon l'une des revendications précédentes, comprenant en outre le déclenchement d'une alarme si une soudure inspectée est jugée défectueuse.

6. Méthode selon la revendication 5, dans laquelle l'alarme signifie que la carte de circuit imprimé sur laquelle est disposée la soudure défectueuse est elle-même défectueuse.

7. Méthode selon l'une des revendications précédentes, dans laquelle le modèle de détection d'anomalies a été entraîné en utilisant un procédé d'apprentissage machine impliquant au moins 100 images en 5 dimensions de soudures.

8. Méthode selon l'une des revendications précédentes, dans laquelle le système optique (10) est fixé à un système robotique (20) configuré pour se déplacer selon des trajectoires (x, y, z) de sorte que le système optique (10) puisse se déplacer en conséquence selon des trajectoires (x, y, z) correspondantes, de sorte que le système optique (10) puisse être disposé séquentiellement près des soudures de la carte de circuit imprimé à inspecter.

9. Système d'inspection de soudures dans une carte de circuit imprimé, comprenant :
un système optique (10) comprenant une caméra (15) configurée pour capturer des images en couleur et un illuminateur (11) définissant quatre quadrants (11a-11d), l'illuminateur (11) étant situé coaxialement dans l'axe optique de la caméra (15), le système optique (10) étant configuré pour être disposé près d'une soudure à inspecter et pour capturer quatre images de la soudure ;
des moyens de traitement configurés pour appliquer numériquement une technique de reconstruction stéréo photométrique aux images capturées de la soudure comme suit :
en utilisant le canal rouge des quatre images, appliquer (806) une technique de reconstruction photométrique stéréo, obtenant ainsi pour le canal rouge deux images (Range_R, Curvature_R) décrivant la topographie de la surface sur laquelle la lumière a frappé et une image (Albedo_R) décrivant la réponse spectrale de la surface sur laquelle la lumière a frappé ;
en utilisant le canal vert des quatre images, appliquer (807) une technique de reconstruction photométrique stéréo, obtenant ainsi pour le canal vert deux images (Range_G, Curvature_G) décrivant la topographie de la surface sur laquelle la lumière a frappé et une image (Albedo_G) décrivant la réponse spectrale de la surface sur laquelle la lumière a frappé ;
en utilisant le canal bleu des quatre images, appliquer (808) une technique de reconstruction photométrique stéréo, obtenant ainsi pour le canal rouge deux images (Range_B, Curvature_B) décrivant la topographie de la surface sur laquelle la lumière a frappé et une image (Albedo_B) décrivant la réponse spectrale de la surface sur laquelle la lumière a frappé ;
à partir des trois images télémétriques (Range_R, Range_G, Range_B), obtenir (809) une image télémétrique normalisée (Range_N) ;
à partir des trois images de courbure (Curvature_R, Curvature_G, Curvature_B), obtenir (810) une image de courbure normalisée (Curvature_N) ;
ajouter les trois images (Albedo_R, Albedo_G, Albedo_B) décrivant la réponse spectrale de la surface sur laquelle la lumière a frappé aux deux images normalisées (Range_N, Curvature_N), formant ainsi l'image en 5 dimensions ;
et pour évaluer par un modèle de détection d'anomalies sur la base des images si la soudure est défectueuse ou non.

10. Système selon la revendication 9, comprenant en outre un système robotique (20) auquel est fixé le système optique (10), le système robotique (20) étant configuré pour se déplacer selon des trajectoires (x, y, z), de sorte que le système optique (10) puisse se déplacer en conséquence selon des trajectoires (x, y, z) correspondantes, le système optique (10) étant ainsi disposé séquentiellement près des soudures de la carte de circuit imprimé à inspecter.

11. Produit de programme informatique comprenant des instructions/un code de programme informatique pour mettre en œuvre la méthode selon l'une des revendications 1 à 8 lors de l'exécution sur un système selon l'une des revendications 9 à 10.

12. Support de mémoire lisible par ordinateur qui stocke des instructions/un code de programme informatique pour mettre en œuvre la méthode selon l'une des revendications 1 à 8 lors de l'exécution sur un système selon l'une des revendications 9 à 10.
